# EUROPEAN PATENT SPECIFICATION

(11) **EP 3 872 703 B1**
(45) Date of publication and mention of the grant of the patent: **13.03.2024**
(21) Application number: 21184262.0
(22) Date of filing: 07.07.2021
(51) Int. Cl.: G06V 10/74, G06V 20/30, G06V 40/16

(54) **METHOD AND DEVICE FOR CLASSIFYING FACE IMAGE, ELECTRONIC DEVICE AND STORAGE MEDIUM**
VERFAHREN UND GERÄT ZUR KLASSIFIZIERUNG VON GESICHTSBILD, ELEKTRONISCHEM GERÄT UND SPEICHERMEDIUM
PROCEDE ET DISPOSITIF DE CLASSIFICATION D'IMAGE DE VISAGE, DISPOSITIF ELECTRONIQUE ET SUPPORT DE STOCKAGE

(30) Priority: 17.07.2020 CN 202010694390
(43) Date of publication of application: 01.09.2021
(73) Proprietor: Beijing Baidu Netcom Science and Technology Co., Ltd., Beijing 100085 (CN)
(72) Inventor: ZHAO, Yicheng, Beijing 100085 (CN); CHEN, Shengqi, Beijing 100085 (CN); ZHU, Lingling, Beijing 100085 (CN)
(74) Representative: Stöckeler, Ferdinand

(56) References cited:
- EP-A1- 3 176 709
- WO-A1-2019/051795
- CAI YE ET AL: "An Online Face Clustering Algorithm for Face Monitoring and Retrieval in Real-Time Videos", 2019 IEEE INTL CONF ON PARALLEL & DISTRIBUTED PROCESSING WITH APPLICATIONS, BIG DATA & CLOUD COMPUTING, SUSTAINABLE COMPUTING & COMMUNICATIONS, SOCIAL COMPUTING & NETWORKING (ISPA/BDCLOUD/SOCIALCOM/SUSTAINCOM), IEEE, 16 December 2019 (2019-12-16), pages 825-830, XP033745718, DOI: 10.1109/ISPA-BDCLOUD-SUSTAINCOM-SOCIALCOM4 8970.2019.00122 [retrieved on 2020-03-25]
- CHARLES OTTO ET AL: "Clustering Millions of Faces by Identity", ARXIV.ORG, CORNELL UNIVERSITY LIBRARY, 201 OLIN LIBRARY CORNELL UNIVERSITY ITHACA, NY 14853, 4 April 2016 (2016-04-04), XP080693283,

## Description

### TECHNICAL FIELD

The disclosure relates to a field of artificial intelligence technologies, particularly to a field of image processing technologies. The disclosure provides a method for classifying a face image, a device for classifying a face image, an electronic device, and a storage medium.

### BACKGROUND

Face clustering is the core and basic artificial intelligence (AI) function of smart album products. The face clustering algorithm can cluster photos of the same person into the same user album to automatically create albums. The main process of the face clustering algorithm includes performing face detection on images, obtaining a face region from each image, performing feature extraction on each face region, obtaining face features, and performing face clustering on multiple face features, and obtaining multiple face clusters and the categories of the face clusters.

In related arts, mainly two face clustering algorithms are used. One is a full clustering algorithm, which perform the full clustering on a newly added face feature and existing face features when a face feature is added. The other is an incremental clustering algorithm, which samples existing face features to obtain sample existing face features and clustering the sample existing face features and a newly added face feature when a face feature is added.

However, in the above two clustering algorithms, the face features need to be re-clustered each time a face feature is added causing a large calculation amount and poor real-time performance.

Alternative solutions are provided in:
Cai Ye et al.: "An Online Face Clustering Algorithm for Face Monitoring and Retrieval in Real-Time Videos", 2019;
EP3176709A1;
WO2019/051795A1; or
Charles Otto et al.: "Clustering Millions of Faces by Identity", 2016.

### SUMMARY

Embodiments of the disclosure provide a method for classifying a face image as recited in claim 1, a device for classifying a face image as recited in claim 10, an electronic device as recited in claim 11, a non-transitory computer-readable storage medium as recited in claim 12, and a computer program product as recited in claim 13.

It should be understood, the contents described in this part are not intended to identify key or important features of the embodiments of the disclosure, nor are they used to limit the scope of the disclosure. Other features of the disclosure will be easily understood by the following description.

The scope of protection of the current invention is provided by the appended claims.

### BRIEF DESCRIPTION OF THE DRAWINGS

The drawings are used to better understand the technical solution, and do not constitute a limitation to the disclosure.
FIG. 1 is a schematic flowchart illustrating a method for classifying a face image according to an example implementation not covered by the claims.
FIG. 2 is a schematic flowchart illustrating a method for classifying a face image according to some embodiments of the disclosure.
FIG. 3 is a schematic flowchart illustrating a method for classifying a face image according to some embodiments of the disclosure.
FIG. 4 is a schematic flowchart illustrating a method for classifying a face image according to some embodiments of the disclosure.
FIG. 5 is a schematic flowchart illustrating a method for classifying a face image according to some embodiments of the disclosure.
FIG. 6 is a schematic diagram illustrating a system architecture according to some embodiments of the disclosure.
FIG. 7 is a schematic diagram illustrating a clustering effect.
FIG. 8 is a schematic diagram illustrating precisions and predict percent of cluster sets of feature vectors under different compression levels according to some embodiments of the disclosure.
FIG. 9 is a schematic diagram illustrating a device for classifying a face image according to some embodiments of the disclosure.
FIG. 10 is a block diagram illustrating an electronic device for implementing a method for classifying a face image according to some embodiments of the disclosure.

### DETAILED DESCRIPTION

The following describes exemplary embodiments of the disclosure in combination with the accompanying drawings which includes various details of embodiments of the disclosure to facilitate understanding and should be considered as merely exemplary. Therefore, those of ordinary skill in the art should realize that various changes and modifications can be made to embodiments described herein without departing from the scope and spirit of the disclosure. Likewise, for clarity and conciseness, descriptions of well-known functions and structures are omitted in the following description.

The following describes a method for classifying a face image, a device for classifying a face image, an electronic device, and a storage medium according to some embodiments of the disclosure in combination with the accompanying drawings.

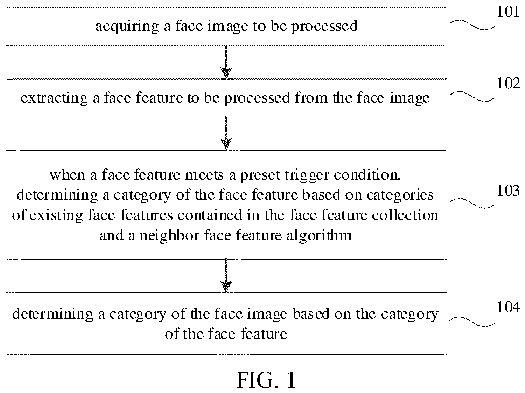

FIG. 1 is a schematic flowchart illustrating a method for classifying a face image according to an example implementation not covered by the claims.

In the disclosure, for example, the method for classifying a face image may be executed by a device for classifying a face image. The device for classifying a face image can be integrated into an electronic device, such that the electronic device can perform the method for classifying a face image.

The electronic device can be any device with computing capabilities, such as a personal computer (PC), a mobile terminal, a server, etc. The mobile terminal can be a hardware device with various operation systems, touch screens and/or display screens, such as a mobile phone, a tablet computer, a personal digital assistant, a wearable device, or a vehicle-mounted device.

As illustrated in FIG. 1, the method for classifying a face image may include the following.

At block 101, a face image to be processed is acquired.

In some examples, the face image to be processed may be a face image uploaded by a user, a face image downloaded by a user, a face image captured by a user, or a new image that is obtained by processing a face image based on an image-processing-based application, which is not limited in the disclosure.

At block 102, a face feature to be processed is extracted from the face image.

In some examples, feature extraction is performed on the face image based on a face feature extraction algorithm to obtain the face feature to be processed.

In some examples, in order to improve accuracy of the recognition result, the feature extraction may be performed on the face image based on a deep learning technology to obtain the face feature to be processed. For example, the face feature extraction may be performed on the face image based on a facial feature extraction model to obtain the face feature to be processed.

It should be understood, the face image may include multiple faces. In this case, in order to improve the accuracy of the recognition result and the classification result, the feature extraction can be performed on each face contained in the face image to obtain the face features to be processed each corresponding to a face.

For example, in order to improve the efficiency of the image recognition, face recognition may be performed on the face image to be processed to obtain a face region, and the feature extraction may be performed on the face region to obtain the face feature to be processed. In an example, the face recognition is performed on the face image based on a face recognition algorithm to obtain the face region. In another example, the face recognition is performed on the face image based on a target recognition algorithm to obtain the face region. In still another example, the face recognition is performed on the face image based on a target detection algorithm, such as Single Shot MultiBox Detector (SSD), You Only Look Once (YOLO), or Faster-RCNN, to obtain the face region.

In some examples, in order to improve the accuracy of the recognition result, the face recognition may be performed on the face image based on a deep learning technology to obtain the face region. For example, a face detection model may be trained using lots of sample images having labeled face regions, such that the trained face detection model has learned the correspondences between face regions and face images. Therefore, in the disclosure, after the face image to be processed is acquired, the face image can be input to the face detection model such that the face detection model performs the face recognition on the face image to output the face region.

It should be understood, the face image may include multiple faces. In this case, in order to improve the accuracy of the detection result, the face detection may be performed separately on each face contained in the face image to obtain the face region corresponding to the face. Therefore, in the disclosure, the feature extraction can be performed respectively on each face region to obtain the face feature to be processed corresponding to the face region.

At block 103, In cases where a face feature collection does not meet a preset trigger condition, a category of the face feature to be processed is determined based on the face feature to be processed, categories of existing face features in the face feature collection, and a neighbor face feature algorithm.

The face feature collection includes multiple face features, which may be a face feature database. In some examples, the preset trigger condition may be used as a trigger of executing a clustering algorithm to cluster the existing face features in the face feature collection and the face feature to be processed. The face feature collection may be pre-established. The face feature collection has multiple existing face features and the category of each existing face feature stored therein.

In some examples, the category of the face feature to be processed is not directly determined by clustering the face feature to be processed and the existing face features in the face feature collection after the face feature to be processed is extracted. Instead, it is determined whether the face feature collection meets the preset trigger condition. In cases where the face feature collection meets the preset trigger condition, the category of the face feature to be processed is determined by performing the clustering operation on the face feature to be processed and the existing face features in the face feature collection. In cases where the face feature collection does not meet the preset trigger condition, the category of the face feature to be processed is not determined based on the clustering algorithm, but the category of the face feature to be processed is determined based on the face feature to be processed, the categories of the existing face features in the face feature collection, and the neighbor face feature algorithm.

In some examples, when the face feature collection includes less existing face features (i.e., the number of the existing face features contained in the face feature collection is smaller than a threshold, and the threshold may be determined based on computing power of the computing device), in order to improve the accuracy of the classification result, the neighbor face feature algorithm can be a K-Nearest Neighbor Algorithm. Similarity degrees between the face feature to be processed and the existing face features in the face feature collection may be calculated, the existing face features may be ranked based on the similarity degrees, and the category of the face feature to be processed may be determined based on categories of a preset number of top-ranked existing face features.

For example, the preset number is 5, the number of the first-ranked existing face features is 3, the number of the second-ranked existing face features is 1, and the number of the third-ranked existing face features is 1. In this case, 3 first-ranked existing face features, 1 second-ranked existing face feature and 1 third-ranked existing face feature are selected for determining the category of the face feature to be processed.

When the face feature collection contains more existing face features (i.e., the number of the existing face features in the face feature collection is larger than the threshold, and the threshold may be determined based on computing power of the computing device), in order to improve the classification efficiency and the real-time performance of the image classification, the neighbor face feature algorithm can be an Approximate Nearest Neighbor Algorithm. The face feature collection may be sampled to obtain sample existing face features, and similarity degrees between the face feature to be processed and the sample existing face features may be calculated, the sample existing face features may be ranked based on the similarity degrees, and the category of the face feature to be processed may be determined based on the categories of a preset number of top-ranked sample existing face features.

That is, in the disclosure, when the face feature collection does not meet the preset trigger condition, the existing face features corresponding to the similarity degrees that are ranked on the top are selected from the face feature collection based on the neighbor face feature algorithm, and the category of the face feature to be processed is determined based on the categories of the selected existing face features. Therefore, the category of the face feature to be processed may be determined without using the clustering algorithm, which may reduce computing amount, improve the efficiency of image classification, and improve the real-time performance of face image classification.

At block 104, the category of the face image is determined based on the category of the face feature to be processed.

In some examples, after the category of the face feature to be processed is determined, the category of the face feature to be processed may be used as the category of the face image. The above mentioned "category" may be used to identify the face image. For example, the category may be person names, nicknames, and so on.

It should be noted, when the face image includes multiple faces, there are multiple face features to be processed correspondingly. In this case, the category of each face feature to be processed can be determined based on the above block 103. The categories of the multiple face features may be used as the category of the face image, i.e., there are multiple categories determined for the face image. For example, when the face image includes two human faces, which are the faces corresponding to users "Peter" and "David", the category of the face image may include "Peter" and "David".

As an application scenario, for smart album products or products with face clustering requirements, when a new face image is obtained through downloading, shooting, and processing via a user, the new face image can be classified by the terminal device.

As another application scenario, when the new face image is obtained through downloading, shooting, and processing via the user, the user can upload the new face image to a cloud album. Accordingly, the face image can be classified by the cloud server.

With the method for classifying a face image according to embodiment of the disclosure, by performing the feature extraction on the face image to be processed to obtain the face feature to be processed, and by determining the category of the face feature to be processed based on the face feature to be processed, the categories of the existing face features contained in the face feature collection and the neighbor face feature algorithm when the face feature collection does not meet the preset trigger condition, the category of the face image is determined based on the category of the face feature to be processed. That is, when the face feature collection does not meet the preset trigger condition, the category of the face feature to be processed is determined based on the neighbor face feature algorithm without using the clustering algorithm, which may reduce computing amount, improve the efficiency of image classification, and improve the real-time performance of face image classification.

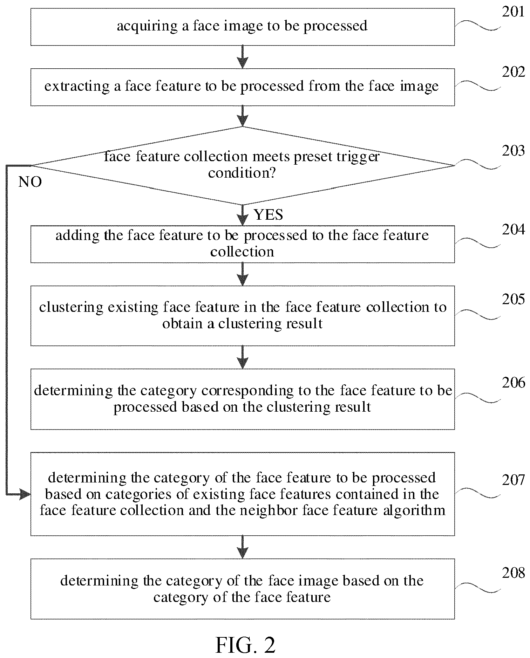

In some implementations, when the face feature collection meets the preset trigger condition, in order to improve the accuracy of the classification result, all face features are clustered based on a clustering algorithm to determine the category of the face feature to be processed. The above will be described in detail in combination with FIG. 2.

FIG. 2 is a schematic flowchart illustrating a method for classifying a face image according to some embodiments of the disclosure.

As illustrated in FIG. 2, the method for classifying a face image includes the following.

At block 201, a face image to be processed is obtained.

At block 202, a face feature to be processed is extracted from the face image based on the face image.

Details of blocks 201 and 202 may be seen from those of blocks 101 and 102 as described above, which are not repeated here.

At block 203, it is determined whether a face feature collection meets a preset trigger condition. When the face feature collection meets the preset trigger condition, blocks 204 to 206 are executed. When the face feature collection does not meet the preset trigger condition, blocks 207 and 208 are executed.

At block 204, the face feature to be processed is added to the face feature collection.

At block 205, existing face features contained in the face feature collection are clustered to obtain a clustering result.

In some examples, when the face feature collection meets the preset trigger condition, the face feature to be processed can be added to the face feature collection. Based on the clustering algorithm, the existing face features contained in the face feature collection may be clustered, and the clustering result may be obtained.

At block 206, a category of the face image corresponding to the face feature to be processed is determined based on to the clustering result.

In some examples, the clustering result may include one or more clusters obtained by clustering the existing face features and classification categories corresponding to respective clusters. Therefore, in the disclosure, the cluster to which the face feature to be processed belongs can be determined, and the category of the cluster may be determined as the category of the face image corresponding to the face feature to be processed.

In block 207, the category of the face feature to be processed is determined based on the face feature to be processed, categories of the existing face features contained in the face feature collection, and a neighbor face feature algorithm.

At block 208, the category of the face image is determined based on the category of the face feature to be processed.

Details of blocks 207 and 208 may be seen from those of blocks 103 and 104 described above, which are not repeated here.

When the face feature collection meets the preset trigger condition, the face feature to be processed is to the face feature collection, the existing face features contained in the face feature collection are clustered to obtain the clustering result, and the category of the face image corresponding to the face feature to be processed is determined based on the clustering result, thereby improving the accuracy of the classification result. When the face feature collection does not meet the preset trigger condition, the category of the face feature to be processed based on the neighbor face feature algorithm, thereby reducing the computing amount, improving the efficiency of the image classification, and improving the real-time performance of the face image classification. Therefore, depending on different conditions, different algorithms may be used to determine the category of the face image corresponding to the face feature to be processed, which can improve the applicability of the method, while improving the accuracy of the classification result and the real-time performance of the image classification.

In order to improve the accuracy of the clustering result, meeting the trigger condition includes: a global clustering time point is up (i.e., a current time reaches a global clustering time point). In this case, clustering the existing face features contained in the face feature collection to obtain the clustering result includes: when the current time reaches the global clustering time point, clustering all existing face features contained in the face feature collection to obtain the clustering result. The global clustering time point may be set in advance.

As an example, in order to reduce the overhead of storage resources and computing resources, the global clustering time point may be a daily non-busy duration of performing the classification processing or clustering processing, such as the early morning period.

As another example, in order to improve the accuracy of the image classification result, the global clustering time point can be set to be periodical. For example, the global clustering time point may be up every 30 minutes. For example, at 00 :00, 00:30, 01:00, 01:30, 02:00, ..., it can be determined that the preset trigger condition is met.

In some examples, when the global clustering time point is up, all existing face features contained in the face feature collection can be clustered based on a full clustering algorithm to obtain the clustering result. Thus, by determining the category of the face feature to be processed based on the clustering result of all existing face features contained in the face feature collection, the accuracy of the classification result may be improved.

It should be noted, in the disclosure, the full clustering algorithm can be executed on a single machine or on distributed machines to reduce the load pressure of the single machine. Thus, the distributed machines cluster all existing face features in the face feature collection based on the full clustering algorithm to obtain the clustering result. As a result, the applicability of the method can be improved.

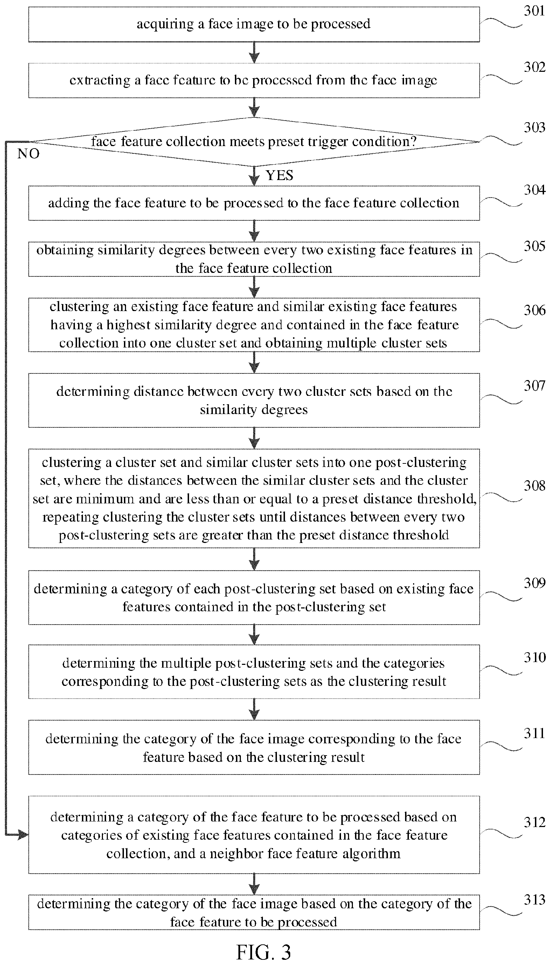

In some implementations, in order to improve the accuracy of the classification result, in the disclosure, all existing face features in the face feature collection are clustered based on the full clustering algorithm to obtain clusters. The category of each cluster is determined based on the face features belonging to the cluster. The clusters and the categories corresponding thereto are determined as the clustering result. The above process will be described in combination with FIG. 3.

FIG. 3 is a schematic flowchart illustrating a method for classifying a face image according to some embodiments of the disclosure.

As illustrated in FIG. 3, the method for classifying a face image may include the following.

At block 301, a face image to be processed is obtained.

At block 302, a facial feature to be processed is extracted from the face image based on the face image.

At block 303, it is determined whether a face feature collection meets a preset trigger condition. When the face feature collection meets the preset trigger condition, blocks 304 to 311 are executed. When the face feature collection does not meet the preset trigger condition, blocks 312 and 313 are executed.

Meeting the preset trigger condition may include that a global clustering time point is up.

At block 304: the face feature to be processed is added into the face feature collection.

Details of blocks 301 to 304 may be seen from the above descriptions, which are not repeated here.

At block 305, similarity degrees between every two existing face features contained in the face feature collection are obtained.

In some examples, the similarity degrees between every two existing face features in the face feature collection can be determined based on a similarity degree calculation algorithm. The similarity degree may be a Euclidean distance, a Manhattan distance, a cosine (cos) similarity, etc., which is not limited in the disclosure.

At block 306, an existing face feature in the face feature collection is clustered and similar existing face features having a highest similarity degree relative to the existing face feature as one cluster set, and multiple cluster sets are obtained.

In some examples, the cluster set refers to a collection of face features that are similar to each other. For each existing face feature in the face feature collection, the similar existing face features may be determined based on the similarity degrees determined in the block 305, where the similarity degrees between these similar existing face features and the existing face feature are maximum. These similar existing face features and the existing face feature are clustered into one cluster set. As a result, multiple cluster sets may be obtained.

At block 307, distances between every two cluster sets are determined based on the similarity degrees between every two existing face features in the face feature collection.

It should be understood, the smaller the distance between two cluster sets, the higher the similarity degree between face features contained in one of the two cluster sets and face features contained in the other one of the two cluster sets. That is, the distance can be inversely related to (or negatively correlated to) the similarity degree.

In detail, the distance between two cluster sets may be determined based on the similarity degrees between face features contained in one cluster set and face features contained in the other cluster set.

For example, a first cluster set 1 includes two face features, i.e., face feature 1-1 and face feature 1-2, and a second cluster set 2 includes two face features, i.e., face feature 2-1 and face feature 2-2. The similarity degree between the face feature 1-1 and the face feature 2-1 can be determined, the similarity degree between the face feature 1-1 and the face feature 2-2 can be determined, the similarity degree between the face feature 1-2 and the face feature 2-1 can be determined, and the similarity degree between the face feature 1-2 and the face feature 2-2 can be determined. Therefore, the distance between the first cluster set 1 and the second cluster set 2 may be determined based on a minimum one amongst the above four determined similarity degrees or based on an average of the above four determined similarity degrees.

At block 308, a cluster set and similar cluster sets are clustered into one post-clustering set, where the distances between the similar cluster sets and the cluster set are the minimum and are less than or equal to a preset distance threshold, and multiple post-clustering sets are obtained. Clustering the cluster sets are repeated until distances between every two post-clustering sets are greater than the preset distance threshold.

It can be understood, the smaller the distance between different cluster sets, the higher the similarity degree between the face features contained in one cluster set and the face features contained in the other cluster set. Therefore, the face features can be clustered based on the distances between the cluster sets to obtain the post-clustering sets. The distances between the post-clustering sets are greater than the preset distance threshold. For example, the preset distance threshold is set in advance.

After determining the distances between every two cluster sets, the similar cluster sets are determined for each cluster set, where the distances between the similar cluster sets and the cluster set are the minimum and are smaller than or equal to the preset distance threshold. The similar cluster sets and the cluster set are clustered into a single post-clustering set. The clustering of the cluster sets is repeated until the distances between every two post-clustering sets are greater than the preset distance threshold.

At block 309, a category of each post-clustering set is determined based on existing face features contained in the post-clustering set.

In some examples, after the post-clustering sets are obtained by clustering the face features, for each post-clustering set, the category of the post-clustering set may be determined based on the existing face features in that post-clustering set. For example, categories of the existing face features contained in each post-clustering set may be obtained. For each category, the number of existing face features belonging to the same category can be counted. The category of the post-clustering set may be determined based on the category corresponding to the largest number of existing face features. In addition, the category of the post-clustering set including the face feature to be processed may be determined as the category of the face feature to be processed.

As an example, the existing face features contained in the post-clustering set are all face features of a user "Peter", and then the category corresponding to the post-clustering set can be "Peter". As another example, most of the existing face features contained in the post-clustering set are face features of a user "Peter", and then the category corresponding to the post-clustering set can be "Peter".

Further, in order to improve the accuracy of the classification result, it can also be determined whether the value of the largest number is greater than a preset threshold. When the value of the largest number is greater than the preset threshold, the category corresponding to the largest number of existing face features is determined as the category of the post-clustering set (or the category of the face feature to be processed). When the value of the largest number is not greater than the preset threshold, an additional category may be assigned to the face feature to be processed.

At block 310, the multiple post-clustering sets and the categories corresponding thereto are determined as the clustering result.

In some examples, the multiple clusters and the categories corresponding respectively to the multiple clusters can be used as the clustering result.

At block 311, the category of the face image corresponding to the face feature to be processed is determined based on the clustering result.

In some examples, the post-clustering set to which the face feature to be processed belongs can be determined, and the category corresponding to the determined post-clustering set is used as the category of the face image corresponding to the face feature to be processed.

In some implementations, after the category of the face feature to be processed, the face feature to be processed is determined, the face feature to be processed and its category can be added to the face feature collection to perform the face clustering processing subsequently, which may improve the accuracy of the clustering result.

At block 312, the category of the face feature to be processed is determined based on the face feature to be processed, categories of existing face features in the face feature collection, and a neighbor face feature algorithm.

At block 313, the category of the face image is determined based on the category of the face feature to be processed.

Details of blocks 312 and 313 may be seen from those of blocks 103 and 104, which are not repeated here.

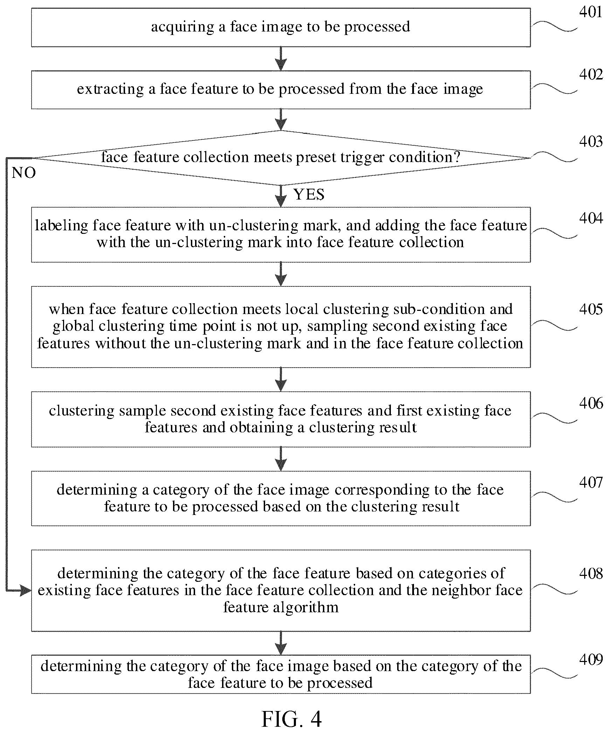

In some implementations, in order to improve the real-time performance of the image classification, the preset trigger condition can further include a local clustering sub-condition. The existing face features in the face feature collection may be clustered based on an incremental clustering algorithm to obtain the clustering result. The above process will be described in detail below in conjunction with FIG. 4.

FIG. 4 is a schematic flowchart illustrating a method for classifying a face image according to some embodiments of the disclosure.

As illustrated in FIG. 4, the method for classifying a face image may include the following.

At block 401, a face image to be processed is obtained.

At block 402, a face feature to be processed is extracted from the face image based on the face image.

Details of the blocks 401 and 402 can be seen from those of blocks 101 and 102, which are not be repeated here.

At block 403, it is determined whether a face feature collection meets a preset trigger condition. When the face feature collection meets the preset trigger condition, blocks 404 to 406 are executed. When the face feature collection does not meet the preset trigger condition, blocks 407 and 408 are executed.

Meeting the preset trigger condition may include that a global clustering time point is up, as well as meeting a local clustering sub-condition. Meeting the local clustering sub-condition may include that a time difference of obtaining first existing face features having un-clustered marks and contained in the face feature collection is greater than a preset time duration, and/or, the number of first existing face features that have the un-clustered marks and are contained in the face feature collection is greater than or equal to a first number threshold.

The time difference refers to the difference between a time point of obtaining a first face feature that has the un-clustered mark at the latest and a time point of obtaining the first face feature that has the un-clustered mark at the earliest. The preset time duration and the first number threshold may be both preset.

In other words, when the time difference between the last time of storing the face feature having the un-clustered mask into the face feature collection and the earliest time of storing the face feature having the un-clustered mark into the face feature collection is relatively large, and/or, when the number of first existing face features having the un-clustered mark and contained in the face feature collection is relatively large, it may be determined that the face feature collection meets the preset trigger condition, and subsequent clustering process is triggered.

At block 404, the face feature to be processed is labeled with an un-clustered mark, and the face feature to be processed and having the un-clustered mark is added to the face feature collection.

In some embodiments, when the face feature collection meets the preset trigger condition, the face feature to be processed can be labelled with the un-clustered mark, and the face feature to be processed and having the un-clustered mark may be added to the face feature collection.

At block 405, when the face feature collection meets the local clustering sub-condition and the global clustering time point is not up, second existing face features that do not have the un-clustered mark and are contained in the face feature collection are sampled.

In some examples, when the face feature collection meets the local clustering sub-condition but the global clustering time point is not up, the existing face features in the face feature collection are clustered based on the incremental clustering algorithm and a clustering result is obtained. In detail, based on the incremental clustering algorithm, the second existing face features that do not have the un-clustered mark and are contained in the face feature collection can be sampled.

At block 406, sample second existing face features and the first existing facial features having the un-clustered mark in the face feature collection are clustered, and a clustering result is obtained.

In some examples, after the sample second existing face features are obtained by sampling the second existing face features, the sample second existing face features and the first existing face features having the un-clustered mark in the face feature collection can be clustered to obtain the clustering result.

In some implementations, in order to improve the efficiency of subsequent image classification and the accuracy of the classification result, after the clustering result is obtained, the un-clustered marks of the first existing face features in the face feature collection can be removed.

At block 407, the category of the face image corresponding to the face feature to be processed is determined based on the clustering result.

In some examples, by performing the clustering, the existing face features in the face feature collection are sampled to reduce the computing amount and improve the real-time performance of the image classification. In addition, by determining the category of the face image corresponding to the face feature to be processed based on the clustering algorithm, the accuracy of the classification result may be improved.

At block 408, the category of the face feature to be processed is determined based on the face feature to be processed, categories of existing face features in the face feature collection, and a neighbor face feature algorithm.

At block 409, the category of the face image is determined based on the category of the face feature to be processed.

Details of block 407 to 409 can be seen from those of blocks 103 and 104 as described above, which are not repeated here.

With the method for classifying a face image according to embodiments of the disclosure, the real-time performance of the image classification and the accuracy of the classification result may be improved. In addition, frequency of performing the incremental clustering or full clustering may be reduced, and the cost and the computing amount may be reduced.

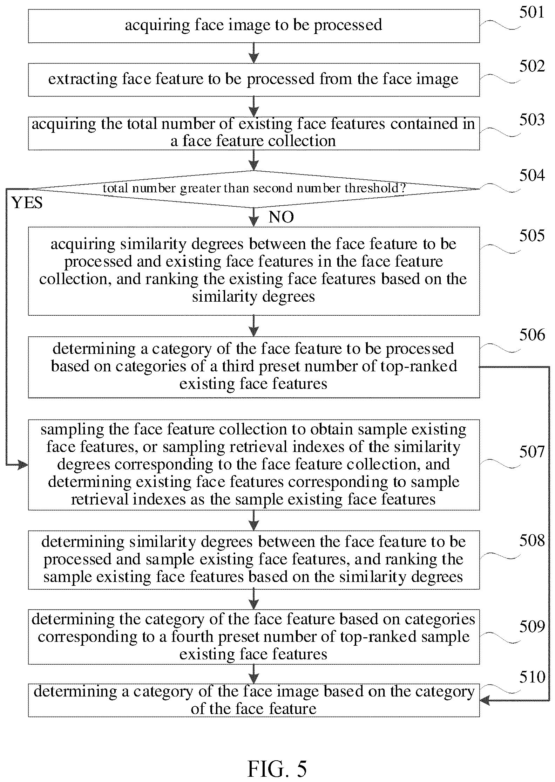

In some implementations, in the disclosure, an appropriate neighbor face feature algorithm may be selected based on the number of the existing face features in the face feature collection, to determine the category of the face feature to be processed. The above process will be described in detail below in conjunction with FIG. 5.

FIG. 5 is a schematic flowchart illustrating a method for classifying a face image according to some embodiments of the disclosure.

As illustrated in FIG. 5, the method for classifying a face image may include the following.

At block 501, a face image to be processed is obtained.

At block 502, a facial feature to be processed is extracted from the face image based on the face image.

Details of blocks 501 and 502 can be seen from those of blocks 101 and 102 as described above, which are not repeated here.

At block 503, the total number of existing face features in the face feature collection is determined.

At block 504, it is determined whether the total number is greater than a second number threshold. When the total number is not greater than the second number threshold, blocks 505 and 506 are executed. When the total number is greater than the second number threshold, blocks 507 to 509 are executed.

The second number threshold is set in advance. It should be understood, the second number threshold is a relatively larger value.

At block 505, similarity degrees between the face feature to be processed and the existing face features in the face feature collection is obtained, and the existing face features are ranked based on the similarity degrees.

In some examples, when the total number of the existing face features in the face feature collection is relatively small (such as smaller than the second number threshold), in order to improve the accuracy of the classification result, the category of the face feature to be processed may be determined based on all existing face features in the face feature collection. In detail, the similarity degree between the face feature to be processed and each existing face feature in the face feature collection is determined based on a similarity calculation algorithm, and the existing face features are ranked based on values of the similarity degrees in a descending order.

At block 506, the category of the face feature to be processed is determined based on categories of a third preset number of top-ranked existing face features.

The value of the third preset number may be set in advance.

After the existing face features are ranked based on the values of similarity degrees in the descending order, the third preset number of top-ranked existing face features may be selected, and the category of the face feature to be processed is determined based on the categories of the selected existing face features.

In detail, the number of existing face features contained in the same category can be determined for each of categories of the third preset number of the top-ranked existing face features. The category of the face feature to be processed is determined based on the category corresponding to the maximum number of existing face features.

For example, the value of the third preset number may be 100. Thus, top-ranked 100 existing face features are selected to determine the category of the face feature to be processed. The top-ranked 100 existing face features correspond to 3 categories, namely category 1, category 2, and category 3. The category 1 corresponds to 55 existing face features, the category 2 corresponds to 20 existing face features, and the category 3 corresponds to 25 existing face features. In this case, the category 1 can be used as the category of the face feature to be processed.

Further, in order to improve the accuracy of the classification result, it can also be determined whether a value of the maximum number is greater than the preset threshold. When the value of the maximum number is greater than the preset threshold, the category corresponding to the maximum number is used as category of the face feature to be processed. When the value of maximum number is not greater than the preset threshold, an additional category is assigned to the face feature to be processed. It may be further determined whether a value of the highest similarity degree is greater than a given threshold. When the value of the highest similarity degree is not greater than the given threshold, an additional category is assigned to the face feature to be processed. When the value of the highest similarity degree is greater than the given threshold, the category of existing face features corresponding to the highest similarity degree is used as the category of the face feature to be processed.

At block 507, the face feature collection is sampled to obtain sample existing face features, or retrieval indexes of similarity degrees corresponding to the face feature collection are sampled and existing face features indicated by the sample retrieval indexes are determined as sample existing face features.

In some examples, when the total number of face features in the face feature collection is relatively large, in order to improve the real-time performance of the image classification, the category of the face feature to be processed may be determined based on some of the existing face features in the face feature collection. In detail, the face feature collection can be sampled to obtain the sample existing face features. For example, the face feature collection can be randomly sampled to obtain the sample existing face features.

In some examples, the retrieval indexes of the similarity degrees corresponding to the face feature collection may be also sampled, and existing face features indicated by the sample retrieval indexes may be determined as the sample existing face features. For example, an index tree may be established for the face feature collection, such as a K-D tree (K-dimensional tree), to obtain multiple branches. The existing face features belonging to the same branch have relatively high similarity degrees relative to each other. The multiple branches can be sampled, and existing face features of the sample branches are used as the sample existing face features. The index tree can be queried based on the face feature to be processed to obtain a branch having the highest similarity degree relative to the face feature to be processed. The existing face features in the obtained branch are determined as the sample existing face features.

At block 508, the similarity degrees between the face feature to be processed and the sample existing face features are obtained, and the sample existing face features are ranked based on the similarity degrees.

In some examples, the similarity degrees between the face feature to be processed and the sample existing facial features can be determined based on the similarity calculation algorithm. The sample face features are ranked based on the values of the similarity degrees in the descending order.

At block 509, the category of the face feature is determined based on categories of a fourth preset number of top-ranked existing face features.

The value of the fourth preset number may be set in advance.

After the sample existing face features are ranked based on the values of the similarity degrees from the descending order, the fourth preset number of sample existing face features that are ranked on the top may be selected, and the category of the face feature to be processed may be determined based on the categories of the selected sample existing face features.

In detail, the number of sample existing face features corresponding to the same category can be determined for each of the categories of the fourth preset number of the top-ranked existing face features, and the category of the face feature to be processed is determined based on the category corresponding to a maximum number.

For example, the value of the fourth preset number may be 100. Thus, top-ranked 100 sample existing face features are selected to determine the category of the face feature to be processed. The top-ranked 100 sample existing face features correspond to 3 categories, namely category 1, category 2, and category 3. The category 1 corresponds to 35 existing face features, the category 2 corresponds to 20 existing face features, and the category 3 corresponds to 45 existing face features. In this case, the category 3 can be used as the category of the face feature to be processed.

It should be noted, the case that the value of the third preset number is the same with the value of the fourth preset number is only an example. In actual application, third preset number and fourth preset number may be set according to actual needs. The third preset number may be the same with or different from the fourth preset number, which is not limited in the disclosure.

Further, in order to improve the accuracy of the classification result, it can also be determined whether the value of the maximum number is greater than a preset threshold. When the value of the maximum number is greater than the preset threshold, the category corresponding to the maximum number is used as the category of the face feature to be processed. When the value of the maximum number is not greater than the preset threshold, an additional category is assigned to the face feature to be processed. It can be also determined whether the value of the highest similarity degree is greater than a given threshold. When the value of the highest similarity degree is not greater than the given threshold, an additional category is assigned to the face feature to be processed. When the value of the highest similarity degree is greater than the given threshold, the category of the sample existing face features corresponding to the highest similarity degree can be determined as the category of the face feature to be processed.

At block 510, the category of the face image is determined based on the category of the face feature to be processed.

Details of the block 510 can be seen from those of block 104 as described above, which are not repeated herein.

In some examples, when the total number of existing face features in the face feature collection is relatively small, in order to improve the accuracy of the classification result, the category of the face feature to be processed is determined based on categories of all existing face features in the face feature collection, the face feature to be processed, and the neighbor face feature algorithm. When the total number of existing face features in the face feature collection is relatively large, in order to improve the real-time performance of the image classification, the category of the face feature to be processed is determined based on the categories of some of the existing face features in the face feature collection, the face feature to be processed, and the neighbor face feature algorithm. Therefore, the category of the face feature to be processed is determined with the different manners, which can improve the applicability of the method. Meanwhile, the real-time performance of the image classification and the accuracy of the classification result can be improved.

In some implementations, since the category of the face feature obtained by clustering is relatively accurate, the categories of the existing face features in the face feature collection may be updated based on the clustering result. Therefore, the categories of the existing face features in the face feature collection can be dynamically maintained, and the accuracy of subsequent classification result can be improved.

It should be noted, when the face features are stored, in order to reduce the storage amount, quantitative compression, dimensional compression, or bit number compression may be performed on the existing face features, and the compressed existing face features are stored. Correspondingly, after acquiring the new face feature to be processed, the new face feature to be processed can be compressed in the same compression method to ensure the consistency between the compression method of the new face feature to be processed and the compression method of the existing face features, thereby improve the accuracy of classification result or the clustering result.

Therefore, when a new face feature to be processed is acquired, the K-Nearest Neighbor Algorithm or Approximate Nearest Neighbor Algorithm are used to obtain, from the existing face features in the face feature collection, neighboring existing face features that are near the face feature to be processed. The category of the face feature to be processed is determined based on the categories of the neighboring existing face features, as a first result. In cases where no neighboring existing face feature that is near the face feature to be processed is found from the existing face features, the category of the face feature to be processed is newly added to the face feature collection.

Then, it may be determined whether a trigger condition of a periodic clustering algorithm (which may be a time threshold or the number of face features to which a periodic clustering processing is not performed) is met. When the trigger condition is met, whether to perform the clustering based on the incremental clustering algorithm or the full clustering algorithm is determined based on the trigger condition. When determining to perform the clustering based on the incremental clustering algorithm, the face feature to be processed and the multiple sample existing face features are clustered to generate a second result. When determining to perform the clustering based on the full clustering algorithm, the face feature to be processed and all existing face features are clustered to generate a third result.

The category of the face feature to be processed can be determined based on a clustering strategy and at least one of the first result, the second result, and the third result, and the category of each existing face feature can be updated.

The clustering strategy may refer to determining the category based preferentially on the third result, then on the second result, and next on the first result. That is, for a face feature to be processed, when the third result is generated, the category of the face feature to be processed is determined based on the third result. When no third result is generated, the category of the face feature to be processed is determined based on the second result. When neither the third result nor the second result is generated, the category of the face feature to be processed is determined based on the first result.

In some examples, the K-Nearest Neighbor Algorithm and the Approximate Nearest Neighbor Algorithm are not limited in the disclosure, and a most suitable algorithm can be determined based on specific usage scenarios. For example, when more than 1 billion existing face features are contained in the face feature collection, Produce Quantization based on Inverted File System (IVFPQ) algorithm can be used to reduce the storage space of indexes and improve query efficiency. When tens of thousands existing face features are contained in the face feature collection, Flat algorithm can be used to reduce the cost of creating indexes. This type of algorithms can usually return query results in seconds, and thus they are adapted to a large-scale clustering scenario (e.g., one billion clustering centers), which can meet the face clustering needs of industrial large-scale production environments.

The incremental clustering algorithm may assign a newly-added face feature to be processed to a most suitable existing cluster set and create a new cluster set and a corresponding category for a newly-added face feature that has a low matching degree with the existing face features. The full clustering algorithm may load all user data, execute the clustering algorithm on a single machine or in a distributed manner, and modify previous clustering results.

It is possible to determine whether to choose the K-Nearest Neighbor Algorithm or the Approximate Nearest Neighbor Algorithm based on the number of existing face features. For example, when the number is large, the Approximate Nearest Neighbor Algorithm may be chosen, and when the number is small, the K-Nearest Neighbor Algorithm may be chosen. In the Approximate Nearest Neighbor Algorithm, a method for creating indexes and an indexing strategy may be selected based on the number.

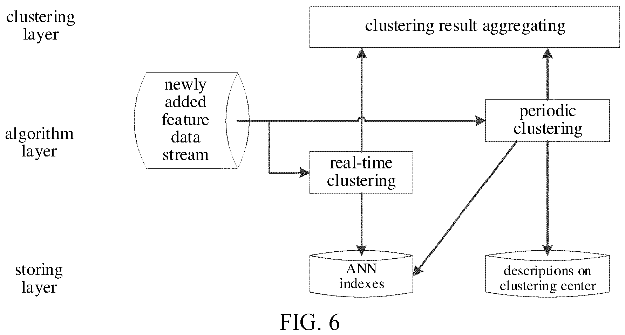

As an example, the system architecture of the disclosure can be illustrated in FIG. 6. A real-time clustering circuit can read new user data in real time from a new feature data stream and predict a cluster set and a corresponding category for the new face feature using the Approximate Nearest Neighbor (ANN) index. The ANN index can be stored in an object storage system, and when in use, the ANN index is cached by a cache service for reuse to reduce a pressure of reading the object storage system.

A periodic clustering circuit can periodically read user data from the newly added feature data stream, run a specified clustering algorithm, and send the result to a clustering result aggregating circuit. The periodic clustering circuit can set different trigger periods and deploy multiple periodic clustering services. For example, an incremental clustering services based on the trigger period of 30 minutes, as well as a full clustering service that is performed in a non-busy duration may be deployed every day. In addition, the periodic clustering circuit may load descriptions of clustering centers from the object storage system before performing the clustering and update the descriptions of clustering centers and the ANN index after performing the clustering.

The clustering result aggregating circuit can process results produced by the real-time clustering circuit and the periodic clustering circuit, aggregate and display the results produced by the above-mentioned two circuits to the user. The periodic clustering result is preferentially displayed to the user than the real-time clustering result. When no periodic clustering result is generated, the real-time clustering result is displayed to the user.

In prior arts, for a scenario where a user intermittently uploads a face image, the following two models can be used to cluster the uploaded face image and obtain the category of the face image.

A first model is Full Data Model (FDM), which reads all user images in each clustering and clusters all user images as well as the newly uploaded face image. For example, multiple face groups and categories each corresponding to a face group may be obtained by clustering the images based on Density-Based Spatial Clustering of Applications with Noise (DBSCAN), Balanced Iterative Reducing and Clustering Using Hierarchies (BIRCH), and Clustering Using Representatives (CURE).

A second model is Part Data Model (PDM), which selects part of images by dividing or sampling the images and clustering the selected images. The sampling method may include sampling by time or a specific sampling algorithm. The specific sampling algorithm may include incremental DBSCAN, incremental CURE, and a clustering algorithm based on statistics (such as COBWEB).

However, for the first model, in a case where the number of images is large, when one or more new image features are added, all images need to be re-clustered, causing a huge cost of clustering and high time delay. For the second model, using the sampling method for performing the clustering may reduce the accuracy of the clustering result.

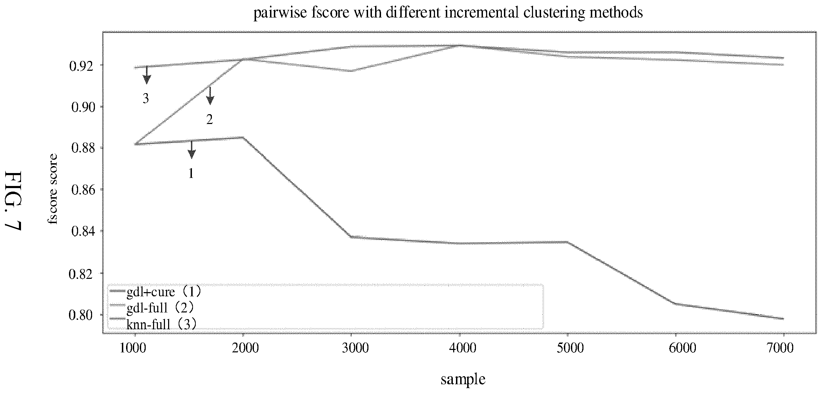

As an example, as illustrated in FIG. 7, the "gdl+cure" refers to a hierarchical clustering algorithm based on Graph Degree Linkage, which uses the data sampling and incremental merging method of the CURE algorithm; the "gdl-full" is a hierarchical clustering algorithm based on Graph Degree Linkage, which use all the previous data for re-clustering; the "knn-full" refers to a clustering algorithm for creating cluster sets based on KNN (K-Nearest Neighbor Algorithm) relationships of feature similarity and is a simplified version of the Graph Degree Linkage algorithm.

It can be seen from FIG. 7, as the number of times of sampling increases, the clustering effect (pairwise flscore) of the incremental clustering algorithm (gdl+cure) after sampling the images is significantly lower than that of the full clustering algorithm (gdl-full) for re-clustering all images. In addition, the clustering effect of the incremental clustering algorithm is reduced as the number of images increases.

In prior arts, a specific algorithm, such as the incremental DBSCAN algorithm, can be used to divide the images to achieve the same clustering effect with the Full Data Model. However, this specific algorithm will increase the cost of clustering, and can only be used for specific algorithms, lowering the applicability.

In the disclosure, a variety of face clustering algorithms are used (such as a combination of the ANN real-time clustering algorithm and periodic clustering algorithm are used synthetically), the disclosure may decouple specific clustering algorithms while reducing the time delay. In addition, the disclosure may significantly reduce the cost than that of the real-time clustering algorithm and achieve a balance amongst the timeliness, the effect, and the cost. Meanwhile, the disclosure can be applied to any existing clustering algorithms and subsequently proposed clustering algorithms to improve the applicability of the method.

It should be noted, although the execution cycle of the incremental clustering algorithm (such as the gdl+cure algorithm mentioned above) in prior arts can be shortened to improve the real-time performance of the image classification, this method will increase the calculation amount of the system.

As an example, see Table 1, in the disclosure, the ANN plus incremental clustering method is adopted. Compared with the method of directly shortening the execution cycle of the incremental clustering algorithm to improve the timeliness, the ANN plus incremental clustering method may reduce the execution complexity from O(N^2) to the linear complexity of O(N). In addition, the ANN plus incremental clustering method reduces the reading bandwidth overhead caused by frequently reading the clustering center or ANN indexes by the real-time clustering circuit from O(N*D) to O(N*M*log2(K)). That is, the bandwidth overhead may be reduced by 16 times while remaining the effect unchanged. For example, the incremental clustering algorithm is the GDL+CURE algorithm.

In the bandwidth overhead, D represents the dimension of the feature vector, M represents the vector dimension after performing the compression using the ANN algorithm, log2(K) represents the bit number in each dimension after performing the compression, N represents the number of face features, and K represents the value number in each dimension after performing the compression using the Product Quantization of the ANN algorithm, and M represents the dimension number after performing the compression using the Product Quantization of the ANN algorithm.

**Table 1**

| solution | effect | timeliness | calculation power | storage |
|---|---|---|---|---|
| solution I: GDL shortened cycle | with lost | minute level, due to high cost, if shortened to less than a minute, the cost will become unacceptable | O(N^2) close to the number of times of clustering, increased by multiple times, estimate that it increases by more than five times | O(N*D) related to the number of times of clustering, estimate that the reading and writing is amplified by 5 times, and invalid data is amplified by 5 times as well |
| solution II: real ANN plus periodic GDL | without loss | second level | ANN predict: (DK+NM), linearly correlated to N, small overhead, ANN update: O(M*K), constant level | O(N*M*log2(K)) ANN can compress the storage, M ranges from 1 to D, for different compression levels, support incremental update, avoid amplifying the reading |

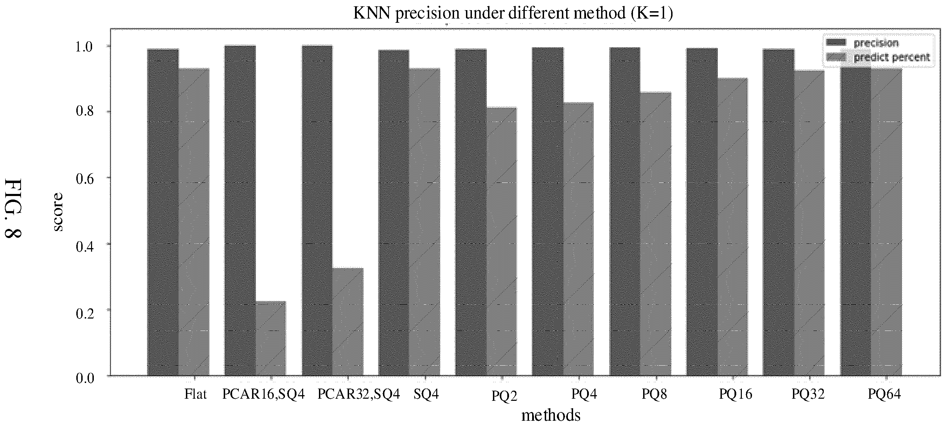

As an example, FIG. 8 illustrates the accuracy and predict percent of cluster sets of the feature vectors (128 dimensions, int32) under different compression levels. It can be seen, after performing the compression using the PQ32 algorithm (32 dimensions, int8), the accuracy and predict percent are basically the same as those of the Flat algorithm that does not perform the compression. The original vectors are compressed by 16 times by the PQ32 algorithm. The Flat algorithm of FIG. 8 stores data directly without performing the compression. The PCAR, the SQ, and the PQ are all existing compression algorithms, and the compression algorithms are used for storage.

Therefore, compared to a single clustering algorithm, the disclosure can provide the same effect as the full clustering algorithm. As shown in Table 1, the advantage of linear query overhead of the ANN indexes can be used to achieve a classification delay of seconds. Therefore, the delay can be reduced from 30 minutes to seconds. In addition, the calculation cost is effectively reduced from the square complexity to the linear complexity, and the storage bandwidth overhead is reduced by 16 times.

In order to achieve the above, embodiments of the disclosure further provide a device for classifying a face image.

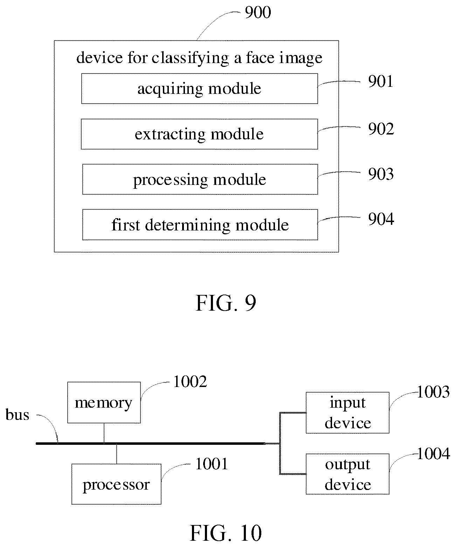

FIG. 9 is a block diagram illustrating a device for classifying a face image according to embodiments of the disclosure.

As illustrated in FIG. 9, the device 900 may include an acquiring module 901, an extracting module 902, a processing module 903 and a first determining module 904.

The acquiring module 901 is configured to acquire a face image to be processed.

The extracting module 902 is configured to extract a face feature to be processed from the face image based on the face image.

The processing module 903 is configured to determine a category of the face feature to be processed based on the face feature to be processed, categories of existing face features in a face feature collection, and a neighbor face feature algorithm, when the face feature collection does not meet a preset trigger condition.

The first determining module 904 is configured to determine the category of the face image based on the category of the face feature to be processed.

In an implementation, the device 900 may further include an updating module, a clustering module, and a second determining module.

The updating module is configured to add the face feature to be processed to the face feature collection, when the face feature collection meets the preset trigger condition.

The clustering module is configured to cluster existing face features contained in the face feature collection to obtain a clustering result.

The second determining module is configured to a category of the face image of the face feature to be processed based on to the clustering result.

In an implementation, meeting the preset trigger condition includes a global clustering time point is up. The clustering module is configured to cluster all existing face features in the face feature collection to obtain the clustering result when the global clustering time point is up.

In an implementation, the clustering module is configured to obtain similarity degrees between every two existing face features contained in the face feature collection; cluster an existing face feature in the face feature collection and similar existing face features having a highest similarity degree relative to the existing face feature as one cluster set to obtain multiple cluster sets; determine distances between every two cluster sets based on the similarity degrees between every two existing face features in the face feature collection; cluster a cluster set and similar cluster sets into one post-clustering set, where the distances between the similar cluster sets and the cluster set are the minimum and are less than or equal to a preset distance threshold; repeat clustering the cluster sets until distances between every two post-clustering sets are greater than the preset distance threshold; determine a category of each post-clustering set based on existing face features contained in the post-clustering set; and determine the multiple post-clustering sets and the categories corresponding thereto as the clustering result.

In an implementation, the updating module is further configured to label the face feature to be processed with an un-clustered mark, and add the face feature to be processed and having the un-clustered mark to the face feature collection.

The preset trigger condition further includes a local clustering sub-condition. Meeting the local clustering sub-condition includes that a time difference of obtaining first existing face features having un-clustered marks and contained in the face feature collection is greater than a preset time duration, and/or, the number of first existing face features that have the un-clustered marks and are contained in the face feature collection is greater than or equal to a first number threshold.

The clustering module is further configured to, when the face feature collection meets the local clustering sub-condition and the global clustering time point is not up, sample second existing face features that do not have the un-clustered mark and are contained in the face feature collection; and cluster sample second existing face features and the first existing facial features having the un-clustered mark in the face feature collection to obtain a clustering result.

In an implementation, the device 900 may further include a removing module.

The removing module is configured to remove the un-clustered marks of the first existing face feature in the face feature collection.

In an implementation, the processing module 903 is further configured to determine the total number of existing face features in the face feature collection; when the total number is less than or equal to a second number threshold, obtain similarity degrees between the face feature to be processed and the existing face features in the face feature collection, and rank the existing face features based on the similarity degrees; and determine the category of the face feature to be processed based on categories of a third preset number of top-ranked existing face features.

In an implementation, the processing module 903 is further configured to, when the total number is greater than the second number threshold, sample the face feature collection to obtain sample existing face features, or sample retrieval indexes of similarity degrees corresponding to the face feature collection and determine existing face features indicated by the sample retrieval indexes as sample existing face features; obtain the similarity degrees between the face feature to be processed and the sample existing face features, rank the sample existing face features based on the similarity degrees; and determine the category of the face feature based on categories of a fourth preset number of top-ranked existing face features.

In an implementation, the updating module is further configured to add the face feature to be processed and the category corresponding thereto to the face feature collection.

In an implementation, the updating module is further configured to update the categories of existing face features contained in the face feature collection based on the clustering result.

In an implementation, the face feature to be processed and the existing face features contained in the face feature collection may be processed with quantitative compression or dimensional compression.

It should be noted, the above explanations of the method for classifying a face image illustrated in FIG. 1 to FIG. 8 are also applicable to the device for classifying a face image, which are not repeated here.

With the device for classifying a face image according to embodiment of the disclosure, by performing the feature extraction on the face image to be processed to obtain the face feature to be processed, and by determining the category of the face feature to be processed based on the face feature to be processed, the categories of the existing face features contained in the face feature collection and the neighbor face feature algorithm when the face feature collection does not meet the preset trigger condition, the category of the face image is determined based on the category of the face feature to be processed. That is, when the face feature collection does not meet the preset trigger condition, the category of the face feature to be processed is determined based on the neighbor face feature algorithm without using the clustering algorithm, which may reduce computing amount, improve the efficiency of image classification, and improve the real-time performance of face image classification.

Embodiments of the disclosure further provide an electronic device and a readable storage medium.

FIG. 10 is a block diagram illustrating an electronic device for implementing a method for classifying a face image according to some embodiments of the disclosure. The electronic device aims to represent various forms of digital computers, such as a laptop computer, a desktop computer, a workstation, a personal digital assistant, a server, a blade server, a mainframe computer, and other suitable computers. The electronic device may also represent various forms of mobile devices, such as a personal digital processing, a cellular phone, a smart phone, a wearable device, and other similar computing devices. The components, connections and relationships of the components, and functions of the components illustrated herein are merely examples, and are not intended to limit the implementation of the disclosure described and/or claimed herein.

As illustrated in FIG. 10, the electronic device includes: one or more processors 1001, a memory 1002, and interfaces for connecting various components, including a high-speed interface and a low-speed interface. Various components are connected to each other with different buses, and may be mounted on a common main board or mounted in other ways as required. The processor may process instructions executed within the electronic device, including instructions stored in or on the memory to display graphical information of the GUI (graphical user interface) on an external input/output device (such as a display device coupled to an interface). In other implementations, multiple processors and/or multiple buses may be used together with multiple memories if necessary. Similarly, multiple electronic devices may be connected, and each electronic device provides a part of necessary operations (for example, as a server array, a group of blade servers, or a multiprocessor system). In FIG. 10, one processor 1001 is taken as an example.

The memory 1002 is a non-transitory computer-readable storage medium according to embodiments of the disclosure. The memory is configured to store instructions executable by at least one processor, to cause the at least one processor to execute a method for classifying a face image according to embodiments of the disclosure. The non-transitory computer-readable storage medium according to embodiments of the disclosure is configured to store computer instructions. The computer instructions are configured to enable a computer to execute a method for classifying a face image according to embodiments of the disclosure.

As the non-transitory computer-readable storage medium, the memory 1002 may be configured to store non-transitory software programs, non-transitory computer executable programs and modules, such as program instructions/modules (such as, an acquiring module 901, an extracting module 902, a processing module 903, and first determining module 904) corresponding to a method classifying a face image according to embodiments of the disclosure. The processor 1001 executes various functional applications and data processing of the server by operating non-transitory software programs, instructions and modules stored in the memory 1002, that is, implements a method for classifying a face image according to embodiments of the disclosure.

The memory 1002 may include a storage program region and a storage data region. The storage program region may store an application required by an operating system and at least one function. The storage data region may store data created by implementing the method for classifying a face image through the electronic device. In addition, the memory 1002 may include a high-speed random-access memory and may also include a non-transitory memory, such as at least one disk memory device, a flash memory device, or other non-transitory solid-state memory device. In some embodiments, the memory 1002 may optionally include memories remotely located to the processor 1001 which may be connected to the electronic device via a network. Examples of the above network include, but are not limited to, the Internet, an intranet, a local area network, a mobile communication network and combinations thereof.

The electronic device may also include: an input device 1003 and an output device 1004. The processor 1001, the memory 1002, the input device 1003, and the output device 1004 may be connected through a bus or in other means. In FIG. 10, the bus is taken as an example.

The input device 1003 may be configured to receive inputted digitals or character information, and generate key signal input related to user setting and function control of the electronic device, such as a touch screen, a keypad, a mouse, a track pad, a touch pad, an indicator stick, one or more mouse buttons, a trackball, a joystick and other input device. The output device 1004 may include a display device, an auxiliary lighting device (e.g., LED), a haptic feedback device (e.g., a vibration motor), and the like. The display device may include, but be not limited to, a liquid crystal display (LCD), a light emitting diode (LED) display, and a plasma display. In some embodiments, the display device may be a touch screen.

The various implementations of the system and technologies described herein may be implemented in a digital electronic circuit system, an integrated circuit system, an application specific ASIC (application specific integrated circuit), a computer hardware, a firmware, a software, and/or combinations thereof. These various implementations may include: being implemented in one or more computer programs. The one or more computer programs may be executed and/or interpreted on a programmable system including at least one programmable processor. The programmable processor may be a special purpose or general-purpose programmable processor, may receive data and instructions from a storage system, at least one input device and at least one output device, and may transmit the data and the instructions to the storage system, the at least one input device and the at least one output device.

These computing programs (also called programs, software, software applications, or codes) include machine instructions of programmable processors, and may be implemented by utilizing high-level procedures and/or object-oriented programming languages, and/or assembly/machine languages. As used herein, the terms "machine readable medium" and "computer readable medium" refer to any computer program product, device, and/or apparatus (such as, a magnetic disk, an optical disk, a memory, a programmable logic device (PLD)) for providing machine instructions and/or data to a programmable processor, including machine readable medium that receives machine instructions as machine readable signals. The term "machine readable signal" refers to any signal for providing the machine instructions and/or data to the programmable processor.

To provide interaction with a user, the system and technologies described herein may be implemented on a computer. The computer has a display device (such as, a CRT (cathode ray tube) or a LCD (liquid crystal display) monitor) for displaying information to the user, a keyboard and a pointing device (such as, a mouse or a trackball), through which the user may provide the input to the computer. Other types of devices may also be configured to provide interaction with the user. For example, the feedback provided to the user may be any form of sensory feedback (such as, visual feedback, auditory feedback, or tactile feedback), and the input from the user may be received in any form (including acoustic input, voice input or tactile input).

The system and technologies described herein may be implemented in a computing system including a background component (such as, a data server), a computing system including a middleware component (such as, an application server), or a computing system including a front-end component (such as, a user computer having a graphical user interface or a web browser through which the user may interact with embodiments of the system and technologies described herein), or a computing system including any combination of such background component, the middleware components, or the front-end component. Components of the system may be connected to each other through digital data communication in any form or medium (such as, a communication network). Examples of the communication network include a local area network (LAN), a wide area networks (WAN), and the Internet.

The computer system may include a client and a server. The client and the server are generally remote from each other and usually interact via the communication network. A relationship between the client and the server is generated by computer programs operated on a corresponding computer and having a client-server relationship with each other. Server can be a cloud server, also known as cloud computing server or virtual machine. It is a host product in cloud computing service system, which solves the defects of traditional physical host and VPS service, such as difficult management and weak business scalability.

With the technical solution according to embodiment of the disclosure, by performing the feature extraction on the face image to be processed to obtain the face feature to be processed, and by determining the category of the face feature to be processed based on the face feature to be processed, the categories of the existing face features contained in the face feature collection and the neighbor face feature algorithm when the face feature collection does not meet the preset trigger condition, the category of the face image is determined based on the category of the face feature to be processed. That is, when the face feature collection does not meet the preset trigger condition, the category of the face feature to be processed is determined based on the neighbor face feature algorithm without using the clustering algorithm, which may reduce computing amount, improve the efficiency of image classification, and improve the real-time performance of face image classification.

## Claims

1. A method for classifying a face image, comprising:
acquiring (101; 201; 301; 401; 501) a face image;
extracting (102; 202; 302; 402; 502) a face feature from the face image;
being **characterized in that**, the method further comprises:
when a global clustering time point is not up, determining a category of the face feature based on categories of existing face features contained in a face feature collection through a neighbor face feature algorithm; wherein the neighbor face feature algorithm is a K-nearest neighbor algorithm or an approximate nearest neighbor algorithm, and wherein determining the category of the face feature comprises:
determining (503) the total number of existing face features in the face feature collection;
obtaining (505) similarity degrees between the face feature and the existing face features in the face feature collection and ranking the existing face features based on the similarity degrees, when the total number is smaller than or equal to a second number threshold;
determining (507) the category of the face feature based on categories of a third preset number of top-ranked existing face features; and
determining (104; 208; 313; 409; 510) the category of the face feature as a category of the face image;
wherein, the method further comprises: when the global clustering time point is up, adding the face feature into the face feature collection, clustering existing face features contained in the face feature collection to obtain a clustering result, and determining the category of the face image corresponding to the face feature based on the clustering result.

2. The method of claim 1,
wherein clustering (205) the face feature and the existing face features contained in the face feature collection to obtain the clustering result comprise: determining the face feature as an existing face feature and clustering all existing face features contained in the face feature collection to obtain the clustering result when the global clustering time point is up.

3. The method of claim 2, wherein clustering all existing face features contained in the face feature collection to obtain the clustering result comprises:
obtaining (305) similarity degrees between every two existing face features contained in the face feature collection;
clustering (306) an existing face feature in the face feature collection and similar existing face features having a highest similarity degree relative to the existing face feature as one cluster set, and obtaining multiple cluster sets;
determining (307) distances between every two cluster sets based on the similarity degrees;
clustering (308) a cluster set and similar cluster sets into one post-clustering set to obtain multiple post-clustering sets, where the distances between the similar cluster sets and the cluster set are minimum and are less than or equal to a preset distance threshold, repeating clustering the cluster sets until distances between every two post-clustering sets are greater than the preset distance threshold;
determining (309) a category of each post-clustering set based on existing face features contained in the post-clustering set; and
determining (310) the multiple post-clustering sets and the categories corresponding to the post-clustering sets as the clustering result.

4. The method of claim 2, wherein adding (304) the face feature to the face feature collection comprises: labeling (404) the face feature with an un-clustered mark, and adding the face feature having the un-clustered mark to the face feature collection;
obtaining first existing face features having un-clustered marks and contained in the face feature collection; and
wherein clustering (205) the face feature and the existing face features contained in the face feature collection to obtain the clustering result comprises: sampling (405) second existing face features without the un-clustered mark and contained in the face feature collection to obtain sample second existing face features, when the face feature collection meets a local clustering sub-condition and the global clustering time point is not up; clustering (406) the sample second existing face features and the first existing facial features, and obtaining a clustering result.

5. The method of claim 4, further comprising:
removing the un-clustered marks of the first existing face features in the face feature collection.

6. The method of claim 1, further comprising:
sampling (507) the face feature collection to obtain sample existing face features, or sampling retrieval indexes of similarity degrees corresponding to the face feature collection and determining existing face features indicated by the sample retrieval indexes as sample existing face features, when the total number is greater than the second number threshold;
obtaining (508) the similarity degrees between the face feature and the sample existing face features, and ranking the sample existing face features based on the similarity degrees; and
determining (509) the category of the face feature based on categories of a fourth preset number of top-ranked existing face features.

7. The method of claim 3, further comprising:
adding the face feature and the category corresponding to the face feature to the face feature collection.

8. The method of claim 1, further comprising:
updating the categories of the existing face features contained in the face feature collection based on the clustering result.

9. The method of any one of claims 1 to 8, wherein the face feature and the existing face features contained in the face feature collection are processed with quantitative compression or dimensional compression.

10. A device (900) for classifying a face image, comprising:
an acquiring module (901), configured to acquire a face image;
an extracting module (902), configured to extract a face feature from the face image based on the face image;
being **characterized in that**, the apparatus is further configured to:
when a global clustering time point is not up, determine a category of the face feature based on categories of existing face features contained in a face feature collection through a neighbor face feature algorithm; wherein the neighbor face feature algorithm is a K-nearest neighbor algorithm or an approximate nearest neighbor algorithm, and the apparatus is configured to:
determine the total number of existing face features in the face feature collection;
obtain similarity degrees between the face feature and the existing face features in the face feature collection and ranking the existing face features based on the similarity degrees, when the total number is smaller than or equal to a second number threshold; and
determine the category of the face feature based on categories of a third preset number of top-ranked existing face features;
and
the apparatus further comprises a first determining module (904), configured to determine the category of the face feature as a category of the face image;
the apparatus is further configured to: when the global clustering time point is up, add the face feature into the face feature collection, cluster existing face features contained in the face feature collection to obtain a clustering result, and determine the category of the face image corresponding to the face feature based on the clustering cluster.

11. An electronic device, comprising:
at least one processor; and
a memory, communicatively coupled to the at least one processor;
wherein the memory is configured to store instruction executable by the at least one processor, and when the instructions are executed by the at least one processor, the at least one processor is configured to execute a method for classifying a face image of any one of claims 1 to 9.

12. A non-transitory computer-readable storage medium, having computer instructions stored thereon, wherein the computer instructions are configured to cause a computer to execute a method for classifying a face image of any one of claims 1 to 9.

13. A computer program product, containing computer programs when executed on a processor, causing the processor to perform a method for classifying a face image of any one of claims 1 to 9.

## Patentansprüche

1. Ein Verfahren zum Klassifizieren eines Gesichtsabbilds, das folgende Schritte aufweist:
Erfassen (101; 201; 301; 401; 501) eines Gesichtsabbilds;
Extrahieren (102; 202; 302; 402; 502) eines Gesichtsmerkmals aus dem Gesichtsabbild;
**dadurch gekennzeichnet, dass** das Verfahren ferner folgende Schritte aufweist:
wenn ein globaler Clusterzeitpunkt nicht abgelaufen ist, Bestimmen einer Kategorie des Gesichtsmerkmals auf Basis von Kategorien vorhandener Gesichtsmerkmale, die in einer Gesichtsmerkmalsammlung enthalten sind, durch einen Nachbargesichtsmerkmalalgorithmus; wobei der Nachbargesichtsmerkmalalgorithmus ein K-Nächster-Nachbar-Algorithmus oder ein Annähernd-Nächster-Nachbar-Algorithmus ist, und wobei das Bestimmen der Kategorie des Gesichtsmerkmals folgende Schritte aufweist:
Bestimmen (503) der Gesamtanzahl vorhandener Gesichtsmerkmale in der Gesichtsmerkmalsammlung;
Erhalten (505) von Ähnlichkeitsgraden zwischen dem Gesichtsmerkmal und den vorhandenen Gesichtsmerkmalen in der Gesichtsmerkmalsammlung und rangmäßiges Einordnen der vorhandenen Gesichtsmerkmale auf Basis der Ähnlichkeitsgrade, wenn die Gesamtzahl kleiner oder gleich einem zweiten Anzahlgrenzwert ist;
Bestimmen (507) der Kategorie des Gesichtsmerkmals auf Basis von Kategorien einer dritten voreingestellten Anzahl von hoch eingeordneten vorhandenen Gesichtsmerkmalen; und
Bestimmen (104; 208; 313; 409; 510) der Kategorie des Gesichtsmerkmals als eine Kategorie des Gesichtsabbilds;
wobei das Verfahren ferner folgende Schritte aufweist: wenn der globale Clusterzeitpunkt abgelaufen ist, Hinzufügen des Gesichtsmerkmals in die Gesichtsmerkmalsammlung, Clustern vorhandener Gesichtsmerkmale, die in der Gesichtsmerkmalsammlung enthalten sind, um ein Clusterergebnis zu erhalten, und Bestimmen der Kategorie des Gesichtsabbilds, die dem Gesichtsmerkmal entspricht, auf Basis des Clusterergebnisses.

2. Das Verfahren gemäß Anspruch 1, bei dem ein Clustern (205) des Gesichtsmerkmals und der vorhandenen Gesichtsmerkmale, die in der Gesichtsmerkmalsammlung enthalten sind, um das Clusterergebnis zu erhalten, folgende Schritte aufweist: Bestimmen des Gesichtsmerkmals als ein vorhandenes Gesichtsmerkmal und Clustern aller vorhandenen Gesichtsmerkmale, die in der Gesichtsmerkmalsammlung enthalten sind, um das Clusterergebnis zu erlagen, wenn der globale Clusterzeitpunkt abgelaufen ist.

3. Das Verfahren gemäß Anspruch 2, bei dem ein Clustern aller vorhandenen Gesichtsmerkmale, die in der Gesichtsmerkmalsammlung enthalten sind, um das Clusterergebnis zu erhalten, folgende Schritte aufweist:
Erhalten (305) von Ähnlichkeitsgraden zwischen jeweils zwei Gesichtsmerkmalen, die in der Gesichtsmerkmalsammlung enthalten sind;
Clustern (306) eines vorhandenen Gesichtsmerkmals in der Gesichtsmerkmalsammlung und ähnlicher vorhandener Gesichtsmerkmale, die einen höchsten Ähnlichkeitsgrad relativ zu dem vorhandenen Gesichtsmerkmal aufweisen, als ein Clustersatz und Erhalten mehrerer Clustersätze;
Bestimmen (307) von Abständen zwischen jeweils zwei Clustersätzen auf Basis der Ähnlichkeitsgrade;
Clustern (308) eines Clustersatzes und ähnlicher Clustersätze zu einem Post-Cluster-Satz, um mehrere Poster-Cluster-Sätze zu erhalten, wo die Abstände zwischen den ähnlichen Clustersätzen und dem Clustersatz minimal ausfallen und kleiner oder gleich einem voreingestellten Abstandsschwellenwert sind, wobei das Clustern der Clustersätze wiederholt wird, bis Abstände zwischen jeweils zwei Post-Cluster-Sätzen größer als der voreingestellte Abstandsschwellenwert sind;
Bestimmen (309) einer Kategorie von jedem Post-Cluster-Satz auf Basis der vorhandenen Gesichtsmerkmale, die in dem Post-Cluster-Satz enthalten sind; und
Bestimmen (310) der mehreren Post-Cluster-Sätze und der Kategorien, die den Post-Cluster-Sätzen entsprechen, als das Clusterergebnis.

4. Das Verfahren gemäß Anspruch 2, bei dem ein Hinzufügen (304) des Gesichtsmerkmals zu der Gesichtsmerkmalsammlung folgende Schritte aufweist: Kennzeichnen (404) des Gesichtsmerkmals mit einer nicht geclusterten Kennzeichnung und Hinzufügen des Gesichtsmerkmals, das die nicht geclusterte Kennzeichnung aufweist, zu der Gesichtsmerkmalsammlung;
Erhalten erster vorhandener Gesichtsmerkmale, die nicht geclusterte Kennzeichnungen aufweisen und in der Gesichtsmerkmalsammlung enthalten sind;
und
wobei das Clustern (205) des Gesichtsmerkmals und der vorhandenen Gesichtsmerkmale, die in der Gesichtsmerkmalsammlung enthalten sind, um das Clusterergebnis zu erhalten, folgende Schritte aufweist: Abtasten (405) zweiter vorhandener Gesichtsmerkmale ohne die nicht geclusterte Kennzeichnung, die in der Gesichtsmerkmalsammlung enthalten sind, um abgetastete zweite vorhandene Gesichtsmerkmale zu erhalten, wenn die Gesichtsmerkmalsammlung eine lokale Clusterteilbedingung erfüllt und der globale Clusterzeitpunkt nicht abgelaufen ist; Clustern (406) der abgetasteten zweiten vorhandenen Gesichtsmerkmale und der ersten vorhandenen Gesichtsmerkmale und Erhalten eines Clusterergebnisses.

5. Das Verfahren gemäß Anspruch 4, das ferner folgenden Schritt aufweist:
Entfernen der nicht geclusterten Kennzeichnungen der ersten vorhandenen Gesichtsmerkmale in der Gesichtsmerkmalsammlung.

6. Das Verfahren gemäß Anspruch 1, das ferner folgende Schritte aufweist:
Abtasten (507) der Gesichtsmerkmalsammlung, um abgetastete vorhandene Gesichtsmerkmale zu erhalten, oder Abtasten von Abrufindizes von Ähnlichkeitsgraden, die der Gesichtsmerkmalsammlung entsprechen, und Bestimmen vorhandener Gesichtsmerkmale, die von den abgetasteten Abrufindizes angezeigt werden, als abgetastete vorhandene Gesichtsmerkmale, wenn die Gesamtanzahl größer als der zweite Anzahlschwellenwert ist;
Erhalten (508) der Ähnlichkeitsgrade zwischen dem Gesichtsmerkmal und den abgetasteten vorhandenen Gesichtsmerkmalen und rangmäßiges Einordnen der abgetasteten vorhandenen Gesichtsmerkmale auf Basis der Ähnlichkeitsgrade; und
Bestimmen (509) der Kategorie des Gesichtsmerkmals auf Basis von Kategorien einer vierten voreingestellten Anzahl von hoch eingeordneten vorhandenen Gesichtsmerkmalen.

7. Das Verfahren gemäß Anspruch 3, das ferner folgenden Schritt aufweist:
Hinzufügen des Gesichtsmerkmals und der Kategorie, die dem Gesichtsmerkmal entspricht, zu der Gesichtsmerkmalsammlung.

8. Das Verfahren gemäß Anspruch 1, das ferner folgenden Schritt aufweist:
Aktualisieren der Kategorien der vorhandenen Gesichtsmerkmale, die in der Gesichtsmerkmalsammlung enthalten sind, auf Basis des Clusterergebnisses.

9. Das Verfahren gemäß einem der Ansprüche 1 bis 8, bei dem das Gesichtsmerkmal und die vorhandenen Gesichtsmerkmale, die in der Gesichtsmerkmalsammlung enthalten sind, mit quantitativer Komprimierung oder dimensionaler Komprimierung verarbeitet werden.

10. Eine Vorrichtung (900) zum Klassifizieren eines Gesichtsabbilds, die folgende Merkmale aufweist:
ein Erfassungsmodul (901), das dazu konfiguriert ist, ein Gesichtsabbild zu erfassen;
ein Extraktionsmodul (902), das dazu konfiguriert ist, auf Basis des Gesichtsabbilds ein Gesichtsmerkmal aus dem Gesichtsabbild zu extrahieren;
**dadurch gekennzeichnet, dass** die Vorrichtung ferner konfiguriert zum:
wenn ein globaler Clusterzeitpunkt nicht abgelaufen ist, Bestimmen einer Kategorie des Gesichtsmerkmals auf Basis von Kategorien vorhandener Gesichtsmerkmale, die in einer Gesichtsmerkmalsammlung enthalten sind, durch einen Nachbargesichtsmerkmalalgorithmus; wobei der Nachbargesichtsmerkmalalgorithmus ein K-Nächster-Nachbar-Algorithmus oder ein Annähernd-Nächster-Nachbar-Algorithmus ist und die Vorrichtung ferner konfiguriert ist zum:
Bestimmen der Gesamtanzahl vorhandener Gesichtsmerkmale in der Gesichtsmerkmalsammlung;
Erhalten von Ähnlichkeitsgraden zwischen dem Gesichtsmerkmal und den vorhandenen Gesichtsmerkmalen in der Gesichtsmerkmalsammlung und rangmäßiges Einordnen der vorhandenen Gesichtsmerkmale auf Basis der Ähnlichkeitsgrade, wenn die Gesamtzahl kleiner als ein oder gleich einem zweiten Anzahlgrenzwert ist; und
Bestimmen der Kategorie des Gesichtsmerkmals auf Basis von Kategorien einer dritten voreingestellten Anzahl von hoch eingeordneten vorhandenen Gesichtsmerkmalen;
und
die Vorrichtung ferner ein erstes Bestimmungsmodul (904) aufweist, das dazu konfiguriert ist, die Kategorie des Gesichtsmerkmals als eine Kategorie des Gesichtsabbilds zu bestimmen;
die Vorrichtung ferner konfiguriert ist zum: wenn der globale Clusterzeitpunkt abgelaufen ist, Hinzufügen des Gesichtsmerkmals in die Gesichtsmerkmalsammlung, Clustern vorhandener Gesichtsmerkmale, die in der Gesichtsmerkmalsammlung enthalten sind, um ein Clusterergebnis zu erhalten, und Bestimmen der Kategorie des Gesichtsabbilds, die dem Gesichtsmerkmal entspricht, auf Basis des Clusterclusters.

11. Eine elektronische Einrichtung, die folgende Merkmale aufweist:
zumindest einen Prozessor; und
einen Speicher, der an den zumindest einen Prozessor kommunikationsgekoppelt ist;
wobei der Speicher dazu konfiguriert ist, Befehle zu speichern, die von dem zumindest einen Prozessor ausführbar sind, und wenn die Befehle von dem zumindest einen Prozessor ausgeführt werden, der zumindest eine Prozessor dazu konfiguriert ist, ein Verfahren zum Klassifizieren eines Gesichtsabbilds gemäß einem der Ansprüche 1 bis 9 auszuführen.

12. Ein nichtflüchtiges, computerlesbares Speichermedium, auf dem Computerbefehle gespeichert sind, wobei die Computerbefehle dazu konfiguriert sind, einen Computer dazu zu veranlassen, ein Verfahren zum Klassifizieren eines Gesichtsabbilds gemäß einem der Ansprüche 1 bis 9 auszuführen.

13. Ein Computerprogrammprodukt, das Computerprogramme enthält, die bei Ausführung auf einem Prozessor den Prozessor dazu veranlassen, ein Verfahren zum Klassifizieren eines Gesichtsabbilds gemäß einem der Ansprüche 1 bis 9 auszuführen.

## Revendications

1. Procédé permettant de classifier une image de visage, comprenant le fait de:
acquérir (101; 201; 301; 401; 501) une image de visage;
extraire (102; 202; 302; 402; 502) une caractéristique de visage de l'image de visage;
**caractérisé par le fait que** le procédé comprend par ailleurs le fait de:
lorsqu'un moment de regroupement global n'est pas écoulé, déterminer une catégorie de la caractéristique de visage sur base des catégories de caractéristiques de visage existantes contenues dans une collection de caractéristiques de visage par l'intermédiaire d'un algorithme de caractéristiques de visage de voisins; où l'algorithme de caractéristiques de visage de voisins est un algorithme de K voisins les plus proches ou un algorithme de voisins approximativement les plus proches, et dans lequel la détermination de la catégorie de la caractéristique de visage comprend le fait de:
déterminer (503) le nombre total de caractéristiques de visage existantes dans la collection de caractéristiques de visage;
obtenir (505) les degrés de similitude entre la caractéristique de visage et les caractéristiques de visage existantes dans la collection de caractéristiques de visage et classifier les caractéristiques de visage existantes sur base des degrés de similitude, lorsque le nombre total est inférieur ou égal à un deuxième seuil de nombre;
déterminer (507) la catégorie de la caractéristique de visage sur base des catégories d'un troisième nombre préétabli de caractéristiques de visage existantes les mieux classifiées; et
déterminer (104; 208; 313; 409; 510) la catégorie de la caractéristique de visage comme catégorie de l'image de visage;
dans lequel le procédé comprend par ailleurs le fait de: lorsque le moment de regroupement global est écoulé, ajouter la caractéristique de visage à la collection de caractéristiques de visage, regrouper les caractéristiques de visage existantes contenues dans la collection de caractéristiques de visage pour obtenir un résultat de regroupement, et déterminer la catégorie de l'image de visage correspondant à la caractéristique de visage sur base du résultat de regroupement.

2. Procédé selon la revendication 1,
dans lequel le regroupement (205) de la caractéristique de visage et des caractéristiques de visage existantes contenues dans la collection de caractéristiques de visage pour obtenir le résultat de regroupement comprend le fait de: déterminer la caractéristique de visage comme une caractéristique de visage existante et regrouper toutes les caractéristiques de visage existantes contenues dans la collection de caractéristiques de visage pour obtenir le résultat de regroupement lorsque le moment de regroupement global est écoulé.

3. Procédé selon la revendication 2, dans lequel le regroupement de toutes les caractéristiques de visage existantes contenues dans la collection de caractéristiques de visage pour obtenir le résultat du regroupement comprend le fait de:
obtenir (305) les degrés de similitude entre chaque fois deux caractéristiques de visage existantes contenues dans la collection de caractéristiques de visage;
regrouper (306) une caractéristique de visage existante dans la collection de caractéristiques de visage et les caractéristiques de visage existantes similaires présentant un degré de similitude le plus élevé par rapport à la caractéristique de visage existante comme un seul ensemble de regroupement, et obtenir de multiples ensembles de regroupement;
déterminer (307) les distances entre chaque fois deux ensembles de regroupement sur base des degrés de similitude;
regrouper (308) un ensemble de regroupement et des ensembles de regroupement similaires pour obtenir un seul ensemble de post-regroupement pour obtenir de multiples ensembles de post-regroupement, où les distances entre les ensembles de regroupement similaires et l'ensemble de regroupement sont minimales et sont inférieures ou égales à un seuil de distance préétabli, répéter le regroupement des ensembles de regroupement jusqu'à ce que les distances entre chaque fois deux ensembles de post-regroupement soient supérieures au seuil de distance préétabli;
déterminer (309) une catégorie de chaque ensemble de post-regroupement sur base des caractéristiques de visage existantes contenues dans l'ensemble de post-regroupement; et
déterminer (310) les multiples ensembles de post-regroupement et les catégories correspondant aux ensembles de post-regroupement comme résultat de regroupement.

4. Procédé selon la revendication 2, dans lequel l'addition (304) de la caractéristique de visage à la collection de caractéristiques de visage comprend le fait de: étiqueter (404) la caractéristique de visage à l'aide d'une marque non regroupée, et ajouter la caractéristique de visage présentant la marque non regroupée à la collection de caractéristiques de visage;
obtenir des premières caractéristiques de visage existantes présentant des marques non regroupées et contenus dans la collection de caractéristiques de visage; et
dans lequel le regroupement (205) de la caractéristique de visage et des caractéristiques de visage existantes contenues dans la collection de caractéristiques de visage pour obtenir le résultat de regroupement comprend le fait de: échantillonner (405) les deuxièmes caractéristiques de visage existantes sans la marque non regroupée et contenues dans la collection de caractéristiques de visage pour obtenir des deuxièmes caractéristiques de visage existantes échantillons, lorsque la collection de caractéristiques de visage remplit une sous-condition de regroupement local et que le moment de regroupement global n'est pas écoulé; regrouper (406) les deuxièmes caractéristiques de visage existantes échantillons et les premières caractéristiques de visage existants, et obtenir un résultat de regroupement.

5. Procédé selon la revendication 4, comprenant par ailleurs le fait de:
éliminer les marques non regroupées des premières caractéristiques de visage existantes dans la collection de caractéristiques de visage.

6. Procédé selon la revendication 1, comprenant par ailleurs le fait de:
échantillonner (507) la collection de caractéristiques de visage pour obtenir des caractéristiques de visage existantes échantillons, ou échantillonner les indices de récupération de degrés de similitude correspondant à la collection de caractéristiques de visage et déterminer les caractéristiques de visage existantes indiquées par les indices de récupération d'échantillons comme caractéristiques de visage existantes échantillons, lorsque le nombre total est supérieur au deuxième seuil de nombre;
obtenir (508) les degrés de similitude entre la caractéristique de visage et les caractéristiques de visage existantes échantillons, et classifier les caractéristiques de visage existantes échantillons sur base des degrés de similitude; et
déterminer (509) la catégorie de la caractéristique de visage sur base des catégories d'un quatrième nombre préétabli de caractéristiques de visage existantes les mieux classifiées.

7. Procédé selon la revendication 3, comprenant par ailleurs le fait de:
ajouter la caractéristique de visage et la catégorie correspondant à la caractéristique de visage à la collection de caractéristiques de visage.

8. Procédé selon la revendication 1, comprenant par ailleurs le fait de:
mettre à jour les catégories des caractéristiques de visage existantes contenues dans la collection de caractéristiques de visage sur base du résultat de regroupement.

9. Procédé selon l'une quelconque des revendications 1 à 8, dans lequel la caractéristique de visage et les caractéristiques de visage existantes contenues dans la collection de caractéristiques de visage sont traitées par compression quantitative ou compression dimensionnelle.

10. Dispositif (900) de classification d'une image de visage, comprenant:
un module d'acquisition (901), configuré pour acquérir une image de visage;
un module d'extraction (902), configuré pour extraire une caractéristique de visage de l'image de visage sur base de l'image de visage;
**caractérisé par le fait que** l'appareil est par ailleurs configuré pour:
lorsqu'un moment de regroupement global n'est pas écoulé, déterminer une catégorie de la caractéristique de visage sur base des catégories de caractéristiques de visage existantes contenues dans une collection de caractéristiques de visage par l'intermédiaire d'un algorithme de caractéristiques de visage de voisins; où l'algorithme de caractéristique de visage de voisins est un algorithme de K voisins les plus proches ou un algorithme de voisins approximativement les plus proches, et l'appareil est configuré pour:
déterminer le nombre total de caractéristiques de visage existantes dans la collection de caractéristiques de visage;
obtenir les degrés de similitude entre la caractéristique de visage et les caractéristiques de visage existantes dans la collection de caractéristiques de visage et classifier les caractéristiques de visage existantes sur base des degrés de similitude, lorsque le nombre total est inférieur ou égal à un deuxième seuil de nombre;
déterminer la catégorie de la caractéristique de visage sur base des catégories d'un troisième nombre préétabli de caractéristiques de visage existantes les mieux classifiées;
et
l'appareil comprend par ailleurs un premier module de détermination (904), configuré pour déterminer la catégorie de la caractéristique du visage comme catégorie de l'image du visage;
l'appareil est par ailleurs configuré pour: lorsque le moment de regroupement global est écoulé, ajouter la caractéristique du visage à la collection de caractéristiques de visage, regrouper les caractéristiques de visage existantes contenues dans la collection de caractéristiques de visage pour obtenir un résultat de regroupement, et déterminer la catégorie de l'image de visage correspondant à la caractéristique de visage sur base du groupe de regroupement.

11. Dispositif électronique, comprenant:
au moins un processeur; et
une mémoire, couplée en communication à l'au moins un processeur;
dans lequel la mémoire est configurée pour mémoriser des instructions pouvant être exécutées par l'au moins un processeur et, lorsque les instructions sont exécutées par l'au moins un processeur, l'au moins un processeur est configuré pour réaliser un procédé de classification d'une image de visage selon l'une quelconque des revendications 1 à 9.

12. Support de mémoire non transitoire lisible par ordinateur, présentant, y mémorisées, des instructions d'ordinateur, dans lequel les instructions d'ordinateur sont configurées pour amener un ordinateur à réaliser un procédé de classification d'une image de visage selon l'une quelconque des revendications 1 à 9.

13. Produit de programme d'ordinateur, contenant des programmes d'ordinateur qui, lorsqu'ils sont exécutés sur un processeur, amènent le processeur à réaliser un procédé de classification d'une image de visage selon l'une quelconque des revendications 1 à 9.
